# EUROPEAN PATENT APPLICATION

(11) **EP 3 534 658 A1**
(43) Date of publication of application: **04.09.2019**
(21) Application number: 17868102.9
(22) Date of filing: 01.11.2017
(51) Int. Cl.: H04W 72/04

(54) **RESOURCE INDICATING METHOD, DEVICE AND SYSTEM**

(30) Priority: 04.11.2016 CN 201610965070
(71) Applicant: Huawei Technologies Co., Ltd., Longgang District Shenzhen, Guangdong 518129 (CN)
(72) Inventor: LI, Hua, Shenzhen Guangdong 518129 (CN); QIN, Yi, Shenzhen Guangdong 518129 (CN); LI, Zhongfeng, Shenzhen Guangdong 518129 (CN); REN, Yi, Shenzhen Guangdong 518129 (CN)
(74) Representative: Roth, Sebastian
(86) International application number: PCT/CN2017/108940
(87) International publication number: WO 2018/082566

(57) **Abstract**

The present invention relates to the field of communications technologies, and discloses a resource indicating method, a device, and a system, so as to resolve a problem of resource indication for a control channel during communication in a beam manner. The method may include: sending, by a base station to user equipment by using higher layer signaling, indication information that is used to indicate, to the user equipment, configuration information for receiving a first control channel; and receiving, by the user equipment, the indication information sent by the base station, and receiving, based on the configuration information indicated by the indication information, control information sent by the base station by using the first control channel.

## Description

This application claims priority to Chinese Patent Application No. 201610965070.X, filed with the Chinese Patent Office on November 4, 2016 and entitled "RESOURCE INDICATING METHOD, DEVICE, AND SYSTEM", which is incorporated herein by reference in its entirety.

### TECHNICAL FIELD

The present invention relates to the field of communications technologies, and in particular, to a resource indicating method, a device, and a system.

### BACKGROUND

With development of communications technologies, in a fifth-generation (English: fifth-generation, 5G) communications technology, application of spectrum resources of a high-frequency band becomes an effective way of implementing high-data-rate communication. On a high frequency band, to overcome path fading of the high-frequency band and increase coverage, a base station and user equipment usually communicate with each other in a beam manner. To be specific, the base station or a user equipment side performs weighting on a plurality of antenna array elements of the base station or the user equipment side, to enhance, in a direction, signal energy formed after weighting, and then in the direction, sends a signal to a peer end or receives a signal sent by the peer end.

In actual application, both transmission and reception of a control channel/data channel between a base station and user equipment may be implemented in the beam manner. To improve accuracy of channel transmission and reception, when transmission and reception of the control channel/data channel are performed in the beam manner, resource indicating needs to be implemented for beams that transmit and receive the two channels. Currently, for the data channel, resource indicating corresponding to the data channel may be implemented by using the control channel. For the control channel, how to implement resource indicating corresponding to the control channel remains pending. As a result, control information cannot be properly received by using the control channel.

### SUMMARY

To resolve the foregoing problem, the present invention provides a resource indicating method, a device, and a system, so as to resolve a problem of how to better receive control information by using a control channel.

To achieve the foregoing objective, the present invention uses the following technical solutions:

According to a first aspect, the present invention provides a resource indicating method, where the method may include:
sending, by a base station to user equipment, indication information that is used to indicate, to the user equipment, configuration information for receiving a first control channel, and sending control information to the user equipment by using the first control channel.

In this way, before sending a control channel to the user equipment, the base station may send, to the user equipment in advance, the indication information that is used to indicate, to the user equipment, configuration information for receiving the control channel, so that the user equipment correctly receives, based on the configuration information indicated by the indication information, the first control channel sent by the base station, to obtain the control information carried by the first control channel.

In an implementation of the first aspect, with reference to the first aspect, the base station may send the indication information to the user equipment in any one of the following manners:
sending the indication information to the user equipment by using a second control channel; or
sending the indication information to the user equipment by using higher layer signaling.

The higher layer signaling may be a Radio Resource Control message or a Media Access Control control element.

The second control channel is sent to the user equipment before the first control channel. Specifically, the first control channel and the second control channel may be sent in different time units or in a same time unit, or may be sent on different carriers or on a same carrier.

It should be noted that when the first control channel and the second control channel are sent in the same time unit, the first control channel and the second control channel may form two levels of control channels, where configuration information corresponding to the second control channel may remain unchanged within a preset time or a configured time, or a bandwidth of the configuration information corresponding to the second control channel may be relatively wide, so that the user equipment can accurately receive the second control channel based on the configuration information indicated by the indication information.

In this way, the base station may not only instruct, by using a previous control channel, the user equipment to receive configuration information of a next control channel, but also indicate, by using the higher layer signaling, configuration information corresponding to a control channel.

In another implementation of the first aspect, with reference to the first aspect or the implementation of the first aspect, the configuration information may include: resource information, port information, or beam information corresponding to the first control channel.

The beam information may include at least one of the following: a transmit beam identifier, a receive beam identifier, a transmit-receive beam pair identifier, a transmit beam group identifier, a transmit-receive beam group identifier, beam quasi-co-location QCL assumption information, and beam information of a transmission mode.

The resource information may include at least one of the following: a transmit resource identifier, a receive resource identifier, a transmit-receive resource pair identifier, a transmit resource group identifier, a transmit-receive resource group identifier, resource quasi-co-location QCL assumption information, and resource information of a transmission mode.

The port information may include at least one of the following: a transmit port identifier, a receive port identifier, a transmit-receive port pair identifier, a transmit port group identifier, a transmit-receive port group identifier, port quasi-co-location QCL assumption information, and port information of a transmission mode.

Further, in actual application, with a changing communications environment, before the base station delivers the control channel to the user equipment each time, a resource, a port, or a beam corresponding to the control channel may be updated depending on a requirement. In this case, for a purpose of making the control channel corresponding to an optimal resource, a port, or a beam, a corresponding update policy needs to be used for the corresponding resource, the port, or the beam of the control channel. Specifically, in still another implementation of the first aspect, with reference to any one of the first aspect or the implementations of the first aspect, before the sending, by a base station to user equipment, indication information used to indicate, to the user equipment, configuration information for receiving a first control channel, and sending control information to the user equipment by using the first control channel, the method may further include:
receiving, by the base station from the user equipment, a request message including update indication information, where the update indication information is used to instruct to update a resource, a port, or a beam corresponding to the first control channel; and
sending, to the user equipment, a measurement resource and measurement indication information that is used to indicate that the measurement resource is corresponding to the first control channel, and receiving, from the user equipment, a measurement result and measurement report indication information that is used to indicate that the measurement result is corresponding to the first control channel.

It should be noted that when a resource, a port, or a beam corresponding to a control channel is updated, a resource, a port, or a beam corresponding to a data channel may also be updated. For example, same update indication information may be used to instruct to update resources, ports, or beams corresponding to the first control channel and the data channel. When the base station delivers the measurement indication information and the measurement resource corresponding to the first control channel, the base station also delivers measurement indication information and a measurement resource corresponding to the data channel. The measurement result received by the base station may further include a measurement result corresponding to the data channel and measurement report indication information that is used to indicate that the measurement result is corresponding to the data channel.

In this way, the resource, the port, or the beam corresponding to the control channel may be updated depending on a requirement. Selecting an optimal resource from the measurement resources as the resource, the port, or the beam ensures communication quality in subsequent delivery of the control channel.

According to a second aspect, the present invention provides a resource indicating method, where the method may include:
receiving, by user equipment, indication information sent by a base station and used to indicate, to the user equipment, configuration information for receiving a first control channel, and receiving, based on the configuration information indicated by the indication information, control information sent by the base station by using the first control channel.

In this way, before receiving a control channel, the user equipment may receive, from the base station in advance, the indication information that is used to indicate, to the user equipment, configuration information for receiving the control channel, so that the user equipment correctly receives, based on the configuration information indicated by the indication information, the first control channel sent by the base station, to obtain the control information carried by the first control channel.

In an implementation of the second aspect, with reference to the second aspect, the user equipment may receive the indication information sent by the base station in any one of the following manners:
receiving the indication information sent by the base station by using a second control channel; or
receiving the indication information sent by the base station by using higher layer signaling.

The higher layer signaling may be a Radio Resource Control message or a Media Access Control control element.

The second control channel is sent to the user equipment before the first control channel. Specifically, the first control channel and the second control channel may be sent in different time units or in a same time unit, or may be sent on different carriers or on a same carrier.

It should be noted that when the first control channel and the second control channel are sent in the same time unit, the first control channel and the second control channel may form two levels of control channels, where configuration information corresponding to the second control channel may remain unchanged within a preset time or a configured time, or a bandwidth of the configuration information corresponding to the second control channel may be relatively wide, so that the user equipment can accurately receive the second control channel based on the configuration information indicated by the indication information, and obtain the control information carried by the control channel.

In this way, the user equipment may not only receive, by using a previous control channel, indication information that is used to indicate, to the user equipment, configuration information for receiving a next control channel, but also receive the indication information by using the higher layer signaling.

In another implementation of the second aspect, with reference to the second aspect or the implementation of the second aspect, the configuration information may include: resource information, port information, or beam information corresponding to the first control channel.

The beam information may include at least one of the following: a transmit beam identifier, a receive beam identifier, a transmit-receive beam pair identifier, a transmit beam group identifier, a transmit-receive beam group identifier, beam quasi-co-location QCL assumption information, and beam information of a transmission mode.

The resource information may include at least one of the following: a transmit resource identifier, a receive resource identifier, a transmit-receive resource pair identifier, a transmit resource group identifier, a transmit-receive resource group identifier, resource quasi-co-location QCL assumption information, and resource information of a transmission mode.

The port information may include at least one of the following: a transmit port identifier, a receive port identifier, a transmit-receive port pair identifier, a transmit port group identifier, a transmit-receive port group identifier, port quasi-co-location QCL assumption information, and port information of a transmission mode.

Further, in actual application, with a changing communications environment, before the base station delivers the control channel to the user equipment each time, a resource, a port, or a beam corresponding to the control channel may be updated depending on a requirement. In this case, for a purpose of making the control channel corresponding to an optimal resource, a port, or a beam, a corresponding update policy needs to be used for the corresponding resource, the port, or the beam of the control channel. Specifically, in still another implementation of the second aspect, with reference to any one of the second aspect or the implementations of the second aspect, before the receiving, by user equipment, indication information sent by a base station and used to indicate, to the user equipment, configuration information for receiving a first control channel, and receiving, based on the configuration information indicated by the indication information, control information sent by the base station by using the first control channel, the method may further include:
sending, by the user equipment to the base station, a request message including update indication information, where the update indication information is used to instruct to update a resource, a port, or a beam corresponding to the first control channel; and
receiving a measurement resource and measurement indication information that are sent by the base station, where the measurement indication information is used to indicate that the measurement resource is corresponding to the first control channel, and sending, to the base station, a measurement result and measurement report indication information that is used to indicate that the measurement result is corresponding to the first control channel.

It should be noted that when a resource, a port, or a beam corresponding to a control channel is updated, a resource, a port, or a beam corresponding to a data channel may also be updated. For example, same update indication information may be used to instruct to update resources, ports, or beams corresponding to the first control channel and the data channel. When the user equipment receives the measurement indication information and the measurement resource corresponding to the first control channel that are delivered by the base station, the user equipment may also receive measurement indication information and a measurement resource corresponding to the data channel, so that the user equipment distinguishes which measurement resource is used for a channel. In addition, when reporting the measurement result corresponding to the first control channel, the user equipment may also report the measurement result corresponding to the data channel and the measurement report indication information that is used to indicate that the measurement result is corresponding to the data channel, so that the base station distinguishes which measurement result belongs to a channel.

In this way, the resource, the port, or the beam corresponding to the control channel may be updated depending on a requirement. Selecting an optimal resource from the measurement resources as the resource, the port, or the beam ensures communication quality in subsequent delivery of the control channel.

According to a third aspect, a base station is provided, and the base station may include:
a generating unit, configured to generate indication information, where the indication information is used to indicate, to the user equipment, configuration information for receiving a first control channel; and
a sending unit, configured to send the indication information to the user equipment;
and send control information to the user equipment by using the first control channel.

According to a fourth aspect, a base station is provided, and the base station may include:
a processor, configured to generate indication information, where the indication information is used to indicate, to the user equipment, configuration information for receiving a first control channel; and
a transceiver, configured to send, to the user equipment, the indication information generated by the processor, where
the transceiver is further configured to send control information to the user equipment by using the first control channel.

According to a fifth aspect, a non-volatile computer-readable storage medium that stores one or more programs is provided, where the one or more programs include an instruction, and when the instruction is executed by the base station in any one of the third aspect, the fourth aspect, or the foregoing implementations, the base station performs the following events:
generating indication information used to indicate, to the user equipment, configuration information for receiving a first control channel, sending the indication information to the user equipment, and sending control information to the user equipment by using the first control channel.

For a specific implementation of the third aspect, the fourth aspect, and the fifth aspect, refer to a behavior function of the base station in the resource indicating method according to any one of the first aspect or the implementations of the first aspect. Details are not repeated herein. In addition, the base station according to the third aspect, the fourth aspect, and the fifth aspect can achieve beneficial effects the same as those in the first aspect.

According to a sixth aspect, user equipment is provided, where the user equipment may include:
a receiving unit, configured to receive indication information sent by a base station and used to indicate, to the user equipment, configuration information for receiving a first control channel; and
a determining unit, configured to determine, according to the indication information, configuration information for receiving the first control channel, where
the receiving unit is further configured to receive, based on the determined configuration information, control information sent by the base station by using the first control channel.

According to a seventh aspect, user equipment is provided, where the user equipment may include:
a transceiver, configured to receive indication information sent by a base station and used to indicate, to the user equipment, configuration information for receiving a first control channel; and
a processor, configured to determine, according to the indication information, configuration information for receiving the first control channel, where
the transceiver is further configured to receive, based on the determined configuration information, control information sent by the base station by using the first control channel.

According to an eighth aspect, a non-volatile computer-readable storage medium that stores one or more programs is provided, where the one or more programs include an instruction, and when the instruction is executed by the user equipment in any one of the sixth aspect, the seventh aspect, or the foregoing implementations, the user equipment performs the following events:
receiving indication information sent by a base station and used to indicate, to the user equipment, configuration information for receiving a first control channel, determining configuration information for receiving the first control channel, and receiving, based on the configuration information, control information sent by the base station by using the first control channel.

For a specific implementation of the sixth aspect, the seventh aspect, and the eighth aspect, refer to a behavior function of the user equipment in the resource indicating method according to any one of the second aspect or the implementations of the second aspect. Details are not repeated herein. In addition, the user equipment according to the sixth aspect, the seventh aspect, and the eighth aspect can achieve beneficial effects the same as those in the second aspect.

According to a ninth aspect, a resource indicating system is provided, including the base station according to the third aspect, the fourth aspect, or the fifth aspect, and the user equipment according to the sixth aspect, the seventh aspect, or the eighth aspect.

### BRIEF DESCRIPTION OF DRAWINGS

FIG. 1 is a schematic diagram of a communications system that implements communication in a beam manner;
FIG. 2 is a schematic diagram of a system architecture according to an embodiment of the present invention;
FIG. 3 is a flowchart of a resource indicating method according to an embodiment of the present invention;
FIG. 3(a) is a schematic diagram of resource indicating according to an embodiment of the present invention;
FIG. 3(b) is a schematic diagram of resource indicating according to an embodiment of the present invention;
FIG. 4 is a flowchart of a resource indicating method according to an embodiment of the present invention;
FIG. 5 is a schematic structural diagram of a base station 30 according to an embodiment of the present invention;
FIG. 6 is a schematic structural diagram of user equipment 40 according to an embodiment of the present invention; and
FIG. 7 shows an architecture of a resource indicating system according to an embodiment of the present invention.

### DESCRIPTION OF EMBODIMENTS

A basic principle of the present invention is: Before a base station sends control information to user equipment by using a control channel, the base station may first deliver indication information to the user equipment, where the indication information is used to indicate, to the user equipment, configuration information for receiving the control channel. After receiving the indication information, the user equipment may accurately receive the control channel based on the configuration information indicated by the indication information, and obtain the control information carried by the control channel.

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

It should be noted that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects. For example, A/B may indicate three situations: A, B, and both A and B.

Before detailing the solution, for ease of understanding the technical solutions described in the present invention, important terms used in the present invention are described in detail. It should be understood that the following terms are merely names provided by a person skilled in the art in the present invention for ease of description, and do not represent or imply that the described system or component shall have such names, and therefore shall not be construed as a limitation on the present invention.

Beam information: is configuration information for receiving a channel (a data channel, a control channel, or a shared channel) by a device (a base station or UE), and may include but is not limited to at least one of the following: a transmit beam identifier, a receive beam identifier, a transmit-receive beam pair identifier, a transmit beam group identifier, a transmit-receive beam group identifier, beam quasi-co-location (English: Quasi-Co-Located, QCL) assumption information, and beam information of a transmission mode. The receive beam identifier may be used to identify a receive beam; the transmit beam identifier may be used to identify a transmit beam; a transmit-receive beam group may include a plurality of transmit-receive beam pairs and the transmit-receive beam group identifier may be used to identify the transmit-receive beam group; a transmit beam group may include a plurality of transmit beams corresponding to a same receive beam and the transmit beam group identifier may be used to identify the transmit beam group; and a transmit-receive beam pair may be a beam pair including a transmit beam and a receive beam, and the transmit-receive beam pair identifier may be used to identify the transmit-receive beam pair.

It should be noted that, different from existing beam information, the beam information in the present invention mainly refers to beam information related to UE reception. For example, for the transmit beam identifier, after a beam pairing process, the UE may obtain an optimal receive beam corresponding to each transmit beam of the base station. The beam pairing process means that the UE tries to receive the transmit beam of the base station by using different receive beams, and determines the optimal receive beam from the receive beams through comparison. The base station may send a beam identifier by using an indication, so that the UE may find information about the corresponding receive beam by searching previous pairing information. For the receive beam identifier, the UE may directly use the beam for reception. For the transmit-receive beam pair identifier, after the beam pairing process, the UE considers each transmit beam and a corresponding optimal receive beam as a beam pair. The base station may indicate a beam pair number, so that the UE may find information about the corresponding receive beam by searching previous pairing information. For the transmit beam group identifier, after the beam pairing process, transmit beams corresponding to a same receive beam are classified into one group, and a group number is fed back to the base station. The base station indicates the number of the transmit-receive beam group, so that the UE may find information about the corresponding receive beam. For the transmit-receive beam group identifier, after the beam pairing process, the UE considers each transmit beam and a corresponding optimal receive beam as a beam pair, classifies transmit-receive beams including a same receive beam into one group, and feeds back a group number to the base station. The base station indicates the number of the transmit-receive beam group, so that the UE may find information about the corresponding receive beam. For the beam QCL assumption information, if the QCL assumption information includes an AOA-related parameter of a UE side, the base station indicates that a corresponding transmit beam and another transmit beam are QCL, that is, corresponding AOA-related parameters are the same. For two transmit beams, a same receive beam may be used for reception, and the UE may determine information about the corresponding receive beam based on the relationship. For the beam information of the transmission mode, if a receive beam is limited in a corresponding transmission mode, the UE may indirectly determine information about the receive beam based on a predefined receive beam. The transmission mode may include but is not limited to any one of the following transmission modes: single port, transmit diversity, and open-loop spatial multiplexing.

Resource information: is configuration information for receiving a channel (a data channel, a control channel, or a shared channel) by a device (a base station or UE), and may include but is not limited to at least one of the following: a transmit resource identifier, a receive resource identifier, a transmit-receive resource pair identifier, a transmit resource group identifier, a transmit-receive resource group identifier, resource QCL assumption information, and resource information of a transmission mode. The receive resource identifier may be used to identify a receive resource; the transmit resource identifier may be used to identify a transmit resource; a transmit-receive resource pair may be a resource pair including a transmit resource and a receive resource, and the transmit-receive resource pair identifier may be used to identify the transmit-receive resource pair; and a transmit resource group may include a plurality of transmit resources corresponding to a same receive resource and the transmit resource group identifier may be used to identify the transmit resource group.

It should be noted that different from existing resource information, the resource information in the present invention mainly refers to resource information related to UE reception. For example, for the transmit resource identifier, after a resource pairing process, the UE may obtain an optimal receive resource corresponding to each transmit resource of the base station. The resource pairing process means that the UE tries to receive the transmit resource of the base station by using different receive resources, and determines the optimal receive resource from the receive resources through comparison. The base station may send a resource identifier by using an indication, so that the UE may find information about the corresponding receive resource by searching previous pairing information. For the receive resource identifier, the UE may directly use the resource for reception. For the transmit-receive resource pair identifier, after the resource pairing process, the UE considers each transmit resource and a corresponding optimal receive resource as a resource pair. The base station may indicate a resource pair number, so that the UE may find information about the corresponding receive resource by searching previous pairing information. For the transmit resource group identifier, after the resource pairing process, transmit resources corresponding to a same receive resource are classified into one group, and a group number is fed back to the base station. The base station indicates the number of the transmit-receive resource group, so that the UE may find information about the corresponding receive resource. For the transmit-receive resource group identifier, after the resource pairing process, the UE considers each transmit resource and a corresponding optimal receive resource as a resource pair, classifies transmit-receive resources including a same receive resource into one group, and feeds back a group number to the base station. The base station indicates the number of the transmit-receive resource group, so that the UE may find information about the corresponding receive resource. For the resource QCL assumption information, if the QCL assumption information includes an AOA-related parameter of a UE side, the base station indicates that a corresponding transmit resource and another transmit resource are QCL, that is, corresponding AOA-related parameters are the same. The two transmit resources may be received by using a same receive resource, and the UE may determine information about the corresponding receive resource based on the relationship. For the resource information of the transmission mode, if a receive resource is limited in a corresponding transmission mode, the UE may indirectly determine information about the receive resource based on a predefined receive resource.

Port information: is configuration information for receiving a channel (a data channel, a control channel, or a shared channel) by a device (a base station or UE), and may include but is not limited to at least one of the following: a transmit port identifier, a receive port identifier, a transmit-receive port pair identifier, a transmit port group identifier, a transmit-receive port group identifier, port QCL assumption information, and port information of a transmission mode. The receive port identifier may be used to identify a receive port; the transmit port identifier may be used to identify a transmit port; a transmit-receive port pair may be a port pair including a transmit port and a receive port, and the transmit-receive port pair identifier may be used to identify the transmit-receive port pair; a transmit port group may include a plurality of transmit ports corresponding to a same receive port and the transmit port group identifier may be used to identify the transmit port group; and a transmit-receive port group may include a plurality of transmit-receive ports and the transmit-receive port group identifier may be used to identify the transmit-receive port group.

It should be noted that different from existing port information, the port information in the present invention mainly refers to port information related to UE reception. For example, for the transmit port identifier, after a port pairing process, the UE may obtain an optimal receive port corresponding to each transmit port of the base station. The port pairing process means that the UE tries to receive the transmit port of the base station by using different receive ports, and determines the optimal receive port from the receive ports through comparison. The base station may send a port identifier by using an indication, so that the UE may find information about the corresponding receive port by searching previous pairing information. For the receive port identifier, the UE may directly use the port for reception. For the transmit-receive port pair identifier, after the port pairing process, the UE considers each transmit port and a corresponding optimal receive port as a port pair. The base station may indicate a port pair number, so that the UE may find information about the corresponding port beam by searching previous pairing information. For the transmit port group identifier, after the port pairing process, transmit ports corresponding to a same receive port are classified into one group, and a group number is fed back to the base station. The base station indicates the number of the transmit-receive port group, so that the UE may find information about the corresponding receive port. For the transmit-receive port group identifier, after the port pairing process, the UE considers each transmit port and a corresponding optimal receive port as a port pair, classifies transmit-receive ports including a same receive port into one group, and feeds back a group number to the base station. The base station indicates the number of the transmit-receive port group, so that the UE may find information about the corresponding receive port. For the port QCL assumption information, if the QCL assumption information includes an AOA-related parameter of a UE side, the base station indicates that a corresponding transmit port and another transmit port are QCL, that is, corresponding AOA-related parameters are the same. The two transmit ports may be received by using a same receive port, and the UE may determine information about the corresponding receive port based on the relationship. For the port information of the transmission mode, if a receive port is limited in a corresponding transmission mode, the UE may indirectly determine information about the receive port based on a predefined receive port.

It can be understood that in this embodiment of the present invention, the receive resource and the transmit resource are relative concepts. Generally, for any device (the base station or the user equipment), a resource used when the device sends any information (or data, or a channel) to a peer end may be referred to as a transmit resource for sending the information (or the data, or the channel) by the device, and a resource used when the device receives any information (or data, or a channel) from the peer end may be referred to as a receive resource for receiving the information (or the data, or the channel) by the device. For example, a resource for the base station to send a first control channel may be referred to as a transmit resource for sending the first control channel by the base station, and a resource for the user equipment to receive the first control channel may be referred to as a receive resource for receiving the first control channel by the user equipment. Likewise, the receive beam and the transmit beam, and the receive port and the transmit port are also relative concepts. Details are not repeated herein.

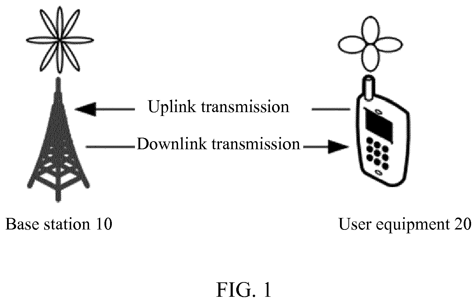

A resource indicating method described in the present invention may be applied to a communications system that performs communication in a beam manner as shown in FIG. 1. The communications system may be a 5G communications system, such as a new radio system. As shown in FIG. 1, the communications system may include a base station 10 and user equipment (English: User U) 20. A Radio Resource Control (English: Radio Resource Control, RRC) connection may be established between the base station 10 and the user equipment 20, so as to implement uplink transmission and downlink transmission between the base station 10 and the user equipment 20. The base station 10 may be a device that communicates, by using one or more sectors, with the user equipment 20 over an air interface in an access network. For example, the base station 10 may be an evolved base station (a NodeB, an eNB, a gNB, a TRB, or an e-NodeB). The user equipment 20 may be a wireless terminal configured to communicate with one or more base stations by using a radio access network (English: Radio Access Network, RAN). For example, the user equipment 20 may be any terminal device, such as a personal communications service (English: Personal Communication Service, PCS) phone, a cordless telephone set, a Session Initiation Protocol (English: Session Initiation Protocol, SIP) phone, a wireless local loop (English: Wireless Local Loop, WLL) station, a personal digital assistant (English: Personal Digital Assistant, PDA), a tablet computer, a notebook computer, an ultra-mobile personal computer (English: Ultra-mobile Personal Computer, UMPC), a netbook, or a personal digital assistant (English: Personal Digital Assistant, PDA). This is not limited in the present invention.

In the communications system shown in FIG. 1, the base station 10 and the user equipment 20 may transmit data to each other in a beam manner on a high-frequency-band resource. For example, a large quantity of antenna array elements may be disposed on the base station 10 and the user equipment 20. When the base station 10 transmits data to the user equipment 20 (that is, downlink data transmission), the base station 10 may dispose a phase shifter at a radio frequency end of the base station 10. A phase weight of an antenna array element may be changed by using the phase shifter, so as to implement analog phase weighting for a plurality of antenna array elements, and form an analog beam aligned to the user equipment 20. The analog beam is used to transmit downlink data to the user equipment 20. Correspondingly, the user equipment 20 may dispose a phase shifter at a radio frequency end of the user equipment 20. A phase weight of an antenna array element may be changed by using the phase shifter, so as to implement analog phase weighting for a plurality of antenna array elements, and form a receive beam to receive the downlink data. Similarly, as an inverse process of the downlink data transmission, when the user equipment 20 transmits data to the base station 10 (that is, uplink data transmission), the foregoing communication manner may also be used. Details are not repeated herein.

It should be noted that FIG. 1 is merely an example diagram, where quantities of the base stations 10 and the user equipments 20 do not constitute any limitation on the solutions provided in the present invention. In actual application, a quantity different from that shown in FIG. 1 may be used for network deployment. In addition, the solutions provided in the present invention may be further applied to any other communications systems, other than that shown in FIG. 1, that implement communication in a beam manner. This is not limited in this embodiment of the present invention. This embodiment of the present invention uses only the communications system shown in FIG. 1 as an example to describe the resource indicating method, a device, and a system provided in the present invention.

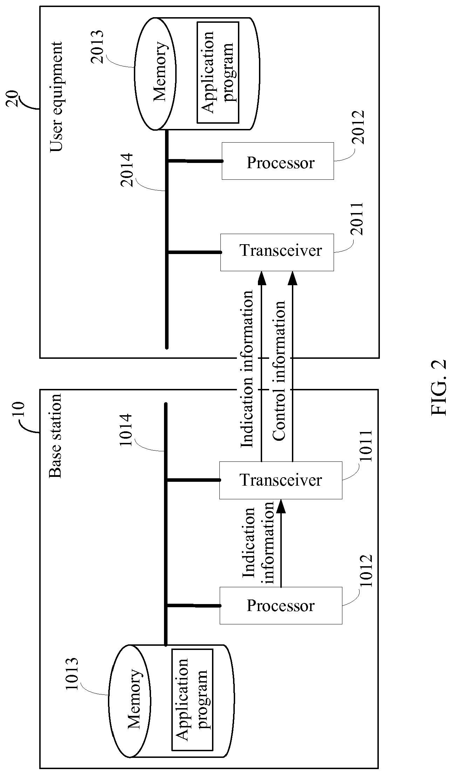

Specifically, to implement the resource indicating method provided in the present invention, as shown in FIG. 2, a base station 10 may include: a transceiver 1011, a processor 1012, a memory 1013, and at least one communications bus 1014, where the communications bus 1014 is configured to implement connection and mutual communication between different components of the base station 10. User equipment 20 may include: a transceiver 2011, a processor 2012, a memory 2013, and at least one communications bus 2014, where the communications bus 2014 is configured to implement connection and mutual communication between different components of the user equipment 20.

The transceiver 1011 is a transceiver unit of the base station 10, may include a plurality of antenna array elements and a phase shifter, and is configured to exchange data with an external network element. For example, the transceiver 1011 of the base station 10 may send data, control information, or indication information to the user equipment 20, or receive data or a measurement result sent by the user equipment 20.

The transceiver 2011 is a transceiver unit of the user equipment 20, may include a plurality of antenna array elements and a phase shifter, and is configured to exchange data with an external network element. For example, the transceiver 2011 of the user equipment 20 may receive data, control information, or indication information sent by the base station 10, or send data or a measurement result to the base station 10.

The processor 1012 and the processor 2012 may be central processing units (English: Central Processing Unit, CPU), or application-specific integrated circuits (English: Application Specific Integrated Circuit, ASIC), or may be configured as one or more integrated circuits implementing this embodiment of the present invention, for example, one or more microprocessors (English: Digital Signal Processor, DSP) or one or more field programmable gate arrays (English: Field Programmable Gate Array, FPGA).

The memory 1013 and the memory 2013 may be volatile memories (English: volatile memory), such as a random access memory (English: Random-Access Memory, RAM); or a non-volatile memory (English: non-volatile memory) such as a read-only memory (English: Read-Only Memory, ROM), a flash memory (English: flash memory), a hard disk drive (English: Hard Disk Drive, HDD), or a solid-state drive (English: Solid-State Drive, SSD), or a combination of the foregoing types of memories. The memory 1013 and the memory 2013 may be configured to store data and code. The processor 1012 may run or execute program code stored in the memory 1013, and invoke the data stored in the memory 1013, to implement various functions of the base station 10. The processor 2012 may run or execute program code stored in the memory 2013, and invoke the data stored in the memory 2013, implement various functions of the user equipment 20.

The communications bus 1014 and the communications bus 2014 may be classified into an address bus, a data bus, a control bus, and the like, or may be an industry standard architecture (English: industry standard architecture, ISA) bus, a peripheral component interconnect (English: Peripheral Component, PCI) bus, or the like. For ease of representation, only a thick line is used to represent the communications buses in FIG. 2, but this does not mean that there is only one bus or only one type of bus.

For ease of description, in the following embodiment, the resource indicating method provided in the present invention is shown and described in detail in a form of steps. The shown steps may alternatively be executed in any communications system other than the communications system shown in FIG. 1. In addition, although a logical order of the resource indicating method provided in the present invention is shown in a method flowchart, in some cases, the shown or described steps may be executed in an order different from the order herein.

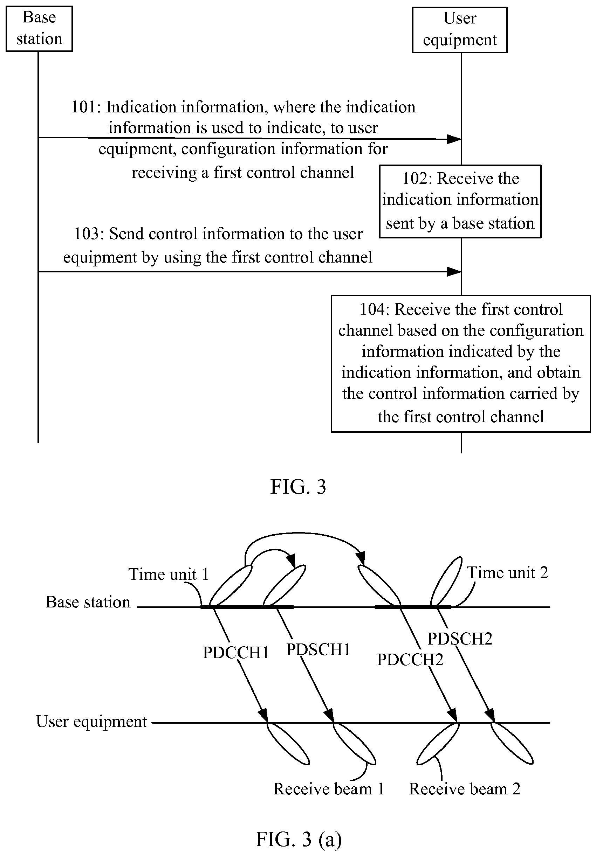

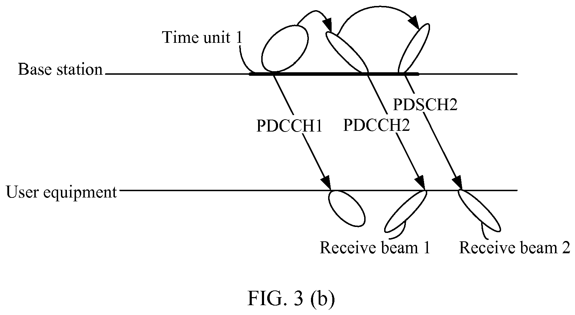

FIG. 3 is a flowchart of a resource indicating method according to an embodiment of the present invention. The method is executed interactively by the base station and the user equipment shown in FIG. 1 or FIG. 2. It should be noted that the solution shown in FIG. 3 merely shows an interaction process between a base station and user equipment. For any other user equipment that is in coverage of the base station and that communicates with the base station in a beam manner, the solution shown in FIG. 3 may also be used for resource indicating. Details are not repeated herein.

It should be noted that a beam mentioned in this embodiment of the present invention may be replaced by a resource or a port. The beam concentrates energy in a given direction, and the direction is a spatial resource. However, from perspectives of the base station and the user equipment, a different port is a way of distinguishing between different resources. From this point of view, the three concepts, namely, the resource, the port, and a receive beam, may replace each other to some extent. Therefore, the technical solutions described in the present invention and applicable to a scenario in which communication is performed in a beam manner is also applicable to a scenario in which a resource or a port is correspondingly used for communication.

Similarly, the method used in the present invention for a transmit beam, a receive beam, a transmit-receive beam pair, a transmit beam group, or a transmit-receive beam group may be replaced with a transmit resource, a receive resource, a transmit-receive resource pair, a transmit resource group, or a transmit-receive resource group, or may be replaced with a transmit port, a receive port, a transmit-receive port pair, a transmit port group, or a transmit-receive port group. Any combination of a beam, a resource, and a port may also replace each other. For example, a combination of the resource and the port may be equivalent to a combination of the beam and the port, and may also be equivalent to a combination of the resource and the beam. A combination of the transmit resource and the transmit port may be equivalent to a combination of the transmit beam and the transmit port, and may also be equivalent to a combination of the transmit resource and the transmit beam. A combination of the receive resource and the receive port may be equivalent to a combination of the receive beam and the receive port, and may also be equivalent to a combination of the receive resource and the receive beam. A combination of the transmit-receive resource pair and the transmit-receive port pair may be equivalent to a combination of the transmit-receive beam pair and the transmit-receive port pair, and may also be equivalent to a combination of the transmit-receive resource pair and the transmit-receive beam pair. A combination of the transmit resource group and the transmit port group may be equivalent to a combination of the transmit beam group and the transmit port group, and may also be equivalent to a combination of the transmit resource group and the transmit beam group. A combination of the transmit-receive resource group and the transmit-receive port group may be equivalent to a combination of the transmit-receive beam group and the transmit-receive port group, and may also be equivalent to a combination of the transmit-receive resource group and the transmit-receive beam group.

As shown in FIG. 3, the method may include the following steps.

Step 101: The base station sends indication information to the user equipment, where the indication information is used to indicate, to the user equipment, configuration information for receiving a first control channel.

The first control channel may be any physical downlink control channel (English: Physical Downlink Control Channel, PDCCH) delivered by the base station to the user equipment.

The configuration information may include but is not limited to: resource information, port information, or beam information corresponding to the first control channel. For the resource information, the port information, and the beam information, refer to the foregoing description, and details are not repeated herein. It should be noted that the configuration information enumerated in the present invention, including the resource information, the port information, or the beam information, is merely described as an example. In addition, any configuration information that can cause the user equipment to accurately receive the first control channel falls within the protection scope of the present invention.

Optionally, in step 101, the base station may send, in any one of the following manners (1) and (2), the indication information that is used to indicate, to the user equipment, the configuration information for receiving the first control channel.
(1) The base station sends the indication information to the user equipment by using a second control channel.

The second control channel may be any PDCCH delivered by the base station and received by the user equipment before the base station sends the first control channel to the user equipment. In other words, a sending time at which the base station delivers the second control channel is before a sending time of the first control channel, and when the first control channel is delivered, the user equipment has already received the second control channel. This can ensure that the user equipment determines, according to the indication information on the second control channel, the configuration information for receiving the first control channel.

Optionally, the first control channel and the second control channel may be sent in different time units or in a same time unit, or may be sent on different carriers. A time unit may be a transmission time interval (English: Transmission Time Interval, TTI), a subframe, a time slot, a minislot (minislot), n symbols (symbol), or a control region (Control Region).

It can be understood that when the indication information is sent to the user equipment by using the second control channel, other information, for example, control information, or related information used to indicate, to the user equipment, configuration information for receiving a data channel, may be further sent to the user equipment by using the second control information. This is not limited in this embodiment of the present invention.

For example, the first control channel is PDCCH2, the second control channel is PDCCH 1. Using the resource being a beam as an example. As shown in FIG. 3(a), the PDCCH1 may be sent in a time unit 1, and the PDCCH2 may be sent in a time unit 2. The PDCCH1 may be for scheduling a PDSCH1 and the PDCCH2, indicates a receive beam 1 to be used when the user equipment receives the PDSCH1, and indicates a receive beam 2 to be used when the user equipment receives the PDCCH2. Likewise, the PDCCH2 may be for scheduling the PDSCH2 and a next PDCCH, indicates a receive beam to be used when the user equipment receives the PDSCH2, and indicates a receive beam to be used when the user equipment receives the next PDCCH. In this way, a previous PDCCH may be used to indicate a receive beam used when the user equipment receives a next PDCCH.

As shown in FIG. 3(b), the PDCCH1 and the PDCCH2 may be sent in a same time unit 1. The PDCCH1 is used as a first-level PDCCH, may be for scheduling the second-level PDCCH2 in the same time unit, and indicate a receive beam 1 to be used when the user equipment receives the PDCCH2. The PDCCH2 may schedule a PDSCH2, and indicates a receive beam 2 to be used when the user equipment receives the PDSCH2. In this way, a first-level PDCCH in a time unit may be used to indicate a receive beam to be used when the user equipment receives a next PDCCH in the time unit.

It should be noted that when the first control channel and the second control channel are sent in the same time unit, configuration information corresponding to the second control channel may remain unchanged within a preset time or a configured time, that is, a weight value of a time-frequency resource corresponding to the second control channel remains unchanged within the preset time or the configured time; or a bandwidth of the configuration information corresponding to the second control channel may be set to be relatively wide, so that the user equipment can correctly receive the second control channel on a fixed resource. The preset time, the configured time, and the bandwidth of the configuration information may be set depending on a requirement, and this is not limited in this embodiment of the present invention.

(2) The base station sends the indication information to the user equipment by using higher layer signaling.

The higher layer signaling may be a Radio Resource Control (English: Radio Resource Control, RRC) message or a Media Access Control control element (English: Media Access Control-Control Element, MAC-CE).

Optionally, the base station may directly add the indication information to the RRC message and send the indication information to the user equipment.

Alternatively, the configuration information for receiving the first control channel by the user equipment may be indicated by using an RRC message and downlink control information (English: Downlink Control Information, DCI). For example, a configuration information set of the first control channel is configured in the RRC message, the configuration information set includes a plurality of pieces of configuration information of first control channel, and the configuration information set remains unchanged within a quite long period of time. The DCI of the first control channel is used to dynamically indicate which configuration information in the configuration information set is the configuration information of the first control channel.

Alternatively, the base station may directly add the indication information to the MAC-CE and send the indication information to the user equipment.

It should be noted that in this embodiment of the present invention, for the second control channel, if the second control channel is any control channel that is delivered by the base station to the user equipment after the user equipment initially accesses the base station (that is, after the base station establishes an RRC connection with the user equipment), the user equipment may be instructed, in any one of the foregoing three manners, to receive configuration information of the second control channel, and details are not repeated herein.

However, if the second control channel is a control channel that is delivered by the base station to the user equipment for the first time when the user equipment initially accesses the base station, that is, if the second control channel is the first control channel delivered by the base station to the user equipment before the base station establishes an RRC connection with the user equipment, configuration information for receiving the second control channel by the user equipment may be determined in a manner such as beam scanning at a stage at which the user equipment initially accesses the base station. A process in which the user equipment initially accesses the base station may sequentially include the following stages: downlink cell synchronization, preamble (preamble) sending, random access response (English: Random Access Response, RAR), and third message (Message3, Msg3) sending. Optionally, the user equipment may measure reference signal receiving power (English: Reference Signal Receiving Power, RSRP) of reference signals received by the user equipment on all resources at the downlink cell synchronization stage, and uses a resource corresponding to optimal RSRP as the configuration information for receiving the second control channel by the user equipment.

Step 102: The user equipment receives the indication information sent by the base station.

Optionally, the user equipment may receive, by using the configuration information corresponding to the second control channel, the indication information sent by the base station.

Step 103: The base station sends control information to the user equipment by using the first control channel.

Optionally, the base station may send the control information to the user equipment by using the first control channel on a transmit resource, a transmit port, or a transmit beam corresponding to the first control channel.

Step 104: The user equipment receives the first control channel based on the configuration information indicated by the indication information and obtains the control information carried by the first control channel.

Optionally, after receiving the indication information, the user equipment may directly determine, according to the indication information, the resource information, the port information, or the beam information corresponding to the first control channel, adjust phase weights of antenna array elements of the user equipment, align the resource information, the port information, or the beam information to the first control channel and receive the first control channel, and obtain corresponding control information from the received first control channel.

In this way, the base station may send, to the user equipment in advance, the indication information that is used to instruct the user equipment to receive a control channel, so that the user equipment determines configuration information for receiving the control channel, and receives, based on the configuration information, control information sent by the base station by using the control channel, to implement resource indicating for the control channel.

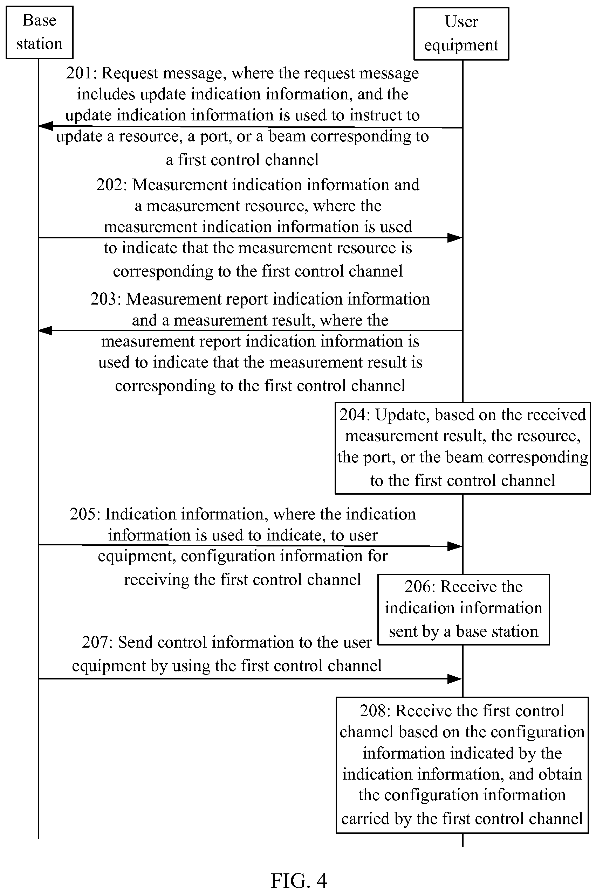

Further, in actual application, with a changing communications environment, before the base station delivers the control channel to the user equipment each time, a resource, a port, or a beam corresponding to the control channel may be updated depending on a requirement, so as to ensure communication quality. In this case, for a purpose of making the control channel corresponding to an optimal resource, a port, or a beam, a corresponding update policy needs to be used for the corresponding resource, the port, or the beam of the control channel. With reference to FIG. 4, the following describes a resource update process by using an example in which a resource, a port, or a beam corresponding to a first control channel needs to be updated before a base station sends control information to user equipment by using the first control channel. As shown in FIG. 4, the method may further include the following steps.

Step 201: The base station receives a request message from the user equipment, where the request message includes update indication information, and the update indication information is used to instruct to update the resource, the port, or the beam corresponding to the first control channel.

Optionally, when a related index (such as RSRP) when the user equipment receives the first control channel on a current resource, a port, or a beam is less than a preset threshold, it is determined that the current resource, the port, or the beam may not be an optimal resource and may need to be updated. In this case, the user equipment sends the request message to the base station. The preset threshold may be set depending on a requirement, and this is not limited in this embodiment of the present invention.

Alternatively, when the base station delivers the first control channel, if it is found that the first control channel cannot be sent to the user equipment, it is determined that a current resource, port, or beam corresponding to the first control channel may not be an optimal resource and may need to be updated. In this case, the base station itself may trigger updating of the resource, the port, or the beam corresponding to the first control channel. In other words, alternatively, in step 201, updating of the resource, the port, or the beam corresponding to the first control channel may be automatically triggered for the base station, without a need to receive the request message sent by the user equipment.

It can be understood that when the resource, the port, or the beam of the first control channel, and a resource, a port, or a beam of a data channel both need to be updated, the update indication information in step 201 shall be further used to instruct to update the resource, the port, or the beam corresponding to the data or control channel. When the update indication information is used to instruct to update the resource, the port, or the beam corresponding to the first control channel, and also used to instruct to update the resource, the port, or the beam corresponding to the data control channel, the update indication information may be information including two bits (bit) (for example, two bits 0 and 1). One bit is used to instruct to update the resource, the port, or the beam corresponding to the first control channel, and the other bit is used to instruct to update the resource, the port, or the beam corresponding to the data channel. For example, (1, 1) may be used to instruct to update the resource, the port, or the beam corresponding to the first control channel and the resource, the port, or the beam corresponding to the data channel, (1, 0) may be used to instruct to merely update the resource, the port, or the beam corresponding to the first control channel, and (0, 1) may be used to instruct to merely update the resource, the port, or the beam corresponding to the data channel.

Step 202: The base station sends measurement indication information and a measurement resource to the user equipment, where the measurement indication information is used to indicate that the measurement resource is corresponding to the first control channel.

The measurement resource may include all available resources for sending the first control channel by the base station, for example, a pilot or a reference signal.

It can be understood that when the update indication information sent by the user equipment to the base station is used to instruct to merely update the resource, the port, or the beam corresponding to the first control channel, that is, when the user equipment requires to merely update the resource, the port, or the beam corresponding to the first control channel, the measurement resource delivered by the base station to the user equipment in step 202 is surely a measurement resource corresponding to the first control channel. In this case, the base station may not send the measurement indication information to the user equipment in step 202, and the user equipment can still learn that the measurement resource is corresponding to the first control channel.

When the update indication information sent by the user equipment to the base station is used to instruct to update the resource, the port, or the beam corresponding to the first control channel, and also used to instruct to update the resource, the port, or the beam corresponding to the data channel, in step 202, the base station further needs to send, to the user equipment, a measurement resource corresponding to the data channel, and measurement indication information indicating that the measurement resource is corresponding to the data channel.

Step 203: The user equipment sends measurement report indication information and a measurement result to the base station, where the measurement report indication information is used to indicate that the measurement result is corresponding to the first control channel.

The base station may measure a channel quality-related parameter (such as RSRP) for each measurement resource, and sends the measurement result according to a preset report policy. The preset report policy may be set depending on a requirement, and this is not limited in this embodiment of the present invention. For example, a measurement resource corresponding to a largest value of a channel quality-related parameter may be used as the measurement result and reported to the base station.

It can be understood that when the update indication information sent by the user equipment to the base station is used to instruct to merely update the resource, the port, or the beam corresponding to the first control channel, that is, when the user equipment requires to merely update the resource, the port, or the beam corresponding to the first control channel, the measurement resource delivered by the base station to the user equipment in step 202 is also only a measurement resource corresponding to the first control channel. In this case, the measurement result obtained by the user equipment in step 203 is also only a measurement result corresponding to the first control channel. Therefore, the user equipment may not send the measurement report indication information to the user equipment in step 203, and the base station can still learn that the received measurement result is a result corresponding to the first control channel.

When the update indication information sent by the user equipment to the base station is used to instruct to update the resource, the port, or the beam corresponding to the first control channel, and also used to instruct to update the resource, the port, or the beam corresponding to the data channel, in step 203, the user equipment further needs to send, to the base station, a measurement result corresponding to the data channel, and measurement report indication information indicating that the measurement result is corresponding to the data channel, so that the base station distinguishes which measurement result belongs to a channel.

For example, the base station configures measurement resources (1, 2, 3, 4, 5) for the control channel, and configures measurement resources (4, 5, 6, 7, 8) to the data channel. After receiving and measuring the measurement resources, the user equipment sends a measurement result according to a report policy. For example, one optimal resource needs to be reported for the control channel, and one optimal resource needs to be reported for the data channel. In this case, if an optimal resource in (1, 2, 3, 4, 5) is 1, and an optimal resource with an optimal channel-quality related parameter in (4, 5, 6, 7, 8) is 8, the user equipment eventually reports the following: The measurement result corresponding to the control channel is the measurement resource 1, and the measurement result corresponding to the data channel is the measurement resource 8.

Step 204: The base station updates, based on the received measurement result, the resource, the port, or the beam corresponding to the first control channel.

Optionally, the base station may check whether the received measurement result is the same as the current resource, port, or beam of the first control channel. If the same, the base station does not update the resource, the port, or the beam of the first control channel; if different, the base station updates the resource, the port, or the beam of the first control channel. In addition, the base station updates, based on the resource, the port, or the beam of the first control channel, the configuration information corresponding to the first control channel.

Steps 205 to 208 are performed, where step 205 is the same as step 101, step 206 is the same as step 102, step 207 is the same as step 103, step 208 is the same as step 104, and details are not repeated herein. The resource, the port, or the beam of the first control channel in steps 205 to 208 may be the resource, the port, or the beam that is updated in steps 201 to 204.

In this way, in the solution shown in FIG. 4, a resource, a port, or a beam corresponding to a control channel may be updated depending on a requirement. Selecting an optimal resource from the measurement resources as the resource, the port, or the beam ensures communication quality in subsequent delivery of the control channel.

The foregoing mainly describes the solutions provided in the embodiments of the present invention from a perspective of interaction between the base station and the user equipment. It can be understood that, to implement the foregoing functions, the base station and the user equipment include corresponding hardware structures and/or software modules for performing the functions. A person of ordinary skill in the art may be aware that, in combination with the examples described in the embodiments disclosed in this specification, units and algorithm steps may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of the present invention.

In the embodiments of the present invention, functional units of the base and the user equipment may be divided according to the foregoing examples of the methods. For example, the functional units may be divided according to the functions, or at least two functions may be integrated in one processing unit. The integrated unit may be implemented in a form of hardware, or may be implemented in a form of a software functional unit. It should be noted that the unit division in this embodiment of the present invention is an example, and is merely logical function division and may be other division in actual implementation.

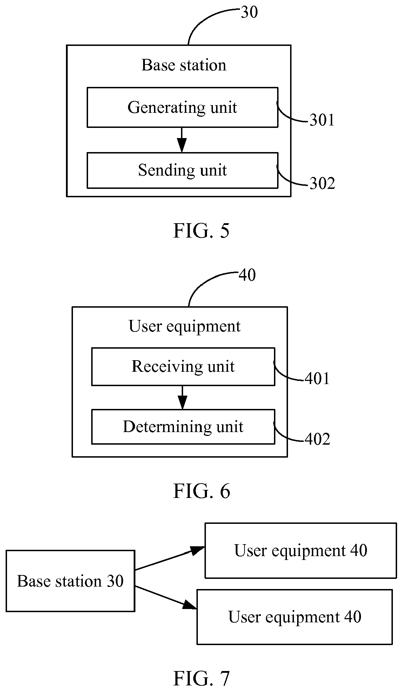

When division of functional units is corresponding to functions, FIG. 5 shows a possible schematic structural diagram of a base station 30 included in the foregoing embodiments. The base station 30 includes a generating unit 301 and a sending unit 302. The generating unit 301 is configured to support the base station in generating indication information, and the sending unit 302 is configured to support the base station in performing actions of the base station in steps 101 and 103.

When an integrated unit is used, the generating unit 301 of the base station 30 shown in FIG. 5 may be integrated in the processor 1012 of the base station 10 shown in FIG. 2. In addition, the generating unit 301 may alternatively be stored in a memory of the base station 10 in a form of program code, to be invoked and executed by a processor of the base station 10 to implement functions of the generating unit 301. The sending unit 302 may be integrated in the transceiver 1011 of the base station 10 shown in FIG. 2, to support the base station in performing steps 101 and 103 in FIG. 3.

When division of functional units is corresponding to functions, FIG. 6 shows a possible schematic structural diagram of user equipment 40 included in the foregoing embodiments. The user equipment 40 includes a receiving unit 401 and a determining unit 402. The receiving unit 401 is configured to support the user equipment in performing steps 102 and 104 in FIG. 3, and the determining unit 402 is configured to support the user equipment in implementing a process of determining configuration information according to indication information.

When an integrated unit is used, the receiving unit 401 of the user equipment 40 shown in FIG. 6 may be integrated in the transceiver 2011 of the user equipment 20 shown in FIG. 2, to support the user equipment in performing steps 102 and 104 in FIG. 3. The determining unit 402 may be integrated in a processor of the user equipment 20 shown in FIG. 2 for implementation. In addition, the determining unit 402 may alternatively be stored in a memory of the user equipment 20 in a form of program code, to be invoked and executed by a processor of the user equipment 20 to implement functions of the determining unit 402.

All content of the steps in the foregoing method embodiments may be incorporated into descriptions about functions of corresponding functional units by reference. Details are not repeated herein.

According to still another aspect, an embodiment of the present invention further provides a resource indicating system. As shown in FIG. 7, the resource indicating system may include the base station 30 and at least one user equipment 40.

The resource indicating system provided in this embodiment of the present invention may implement the resource indicating method shown in FIG. 3 or FIG. 5, and therefore can achieve beneficial effects the same as those in the foregoing resource indicating method. Details are not repeated herein.

The present invention further provides the following embodiments. It should be noted that numbers of the following embodiments do not necessarily follow a numbering order of the foregoing embodiments.
Embodiment 1: A resource indicating method, including:
   sending, by a base station, indication information to user equipment, where the indication information is used to indicate, to the user equipment, configuration information for receiving a first control channel; and
   sending, by the base station, control information to the user equipment by using the first control channel.
Embodiment 2: The method according to Embodiment 1, where the configuration information includes: resource information, port information, or beam information corresponding to the first control channel, where
   the beam information includes at least one of the following: a transmit beam identifier, a receive beam identifier, a transmit-receive beam pair identifier, a transmit beam group identifier, a transmit-receive beam group identifier, beam quasi-co-location QCL assumption information, and beam information of a transmission mode;
   the resource information includes at least one of the following: a transmit resource identifier, a receive resource identifier, a transmit-receive resource pair identifier, a transmit resource group identifier, a transmit-receive resource group identifier, resource quasi-co-location QCL assumption information, and resource information of a transmission mode; and
   the port information includes at least one of the following: a transmit port identifier, a receive port identifier, a transmit-receive port pair identifier, a transmit port group identifier, a transmit-receive port group identifier, port quasi-co-location QCL assumption information, and port information of a transmission mode.
Embodiment 3: The method according to Embodiment 1 or 2, where the sending, by a base station, indication information to user equipment includes:
   sending, by the base station, the indication information to the user equipment by using a second control channel; or
   sending, by the base station, the indication information to the user equipment by using higher layer signaling.
Embodiment 4: The method according to Embodiment 3, where
   the first control channel and the second control channel are sent in different time units; or
   the first control channel and the second control channel are sent in a same time unit; or
   the first control channel and the second control channel are sent on different carriers.
Embodiment 5: The method according to Embodiment 3 or 4, where
   configuration information corresponding to the second control channel remains unchanged within a preset time or a configured time.
Embodiment 6: The method according to any one of Embodiments 1 to 5, where the method further includes:
   receiving, by the base station, a request message from the user equipment, where the request message includes update indication information, and the update indication information is used to instruct to update a resource, a port, or a beam corresponding to the first control channel.
Embodiment 7: The method according to Embodiment 6, where the method further includes:
   sending, by the base station, measurement indication information and a measurement resource to the user equipment, where the measurement indication information is used to indicate that the measurement resource is corresponding to the first control channel.
Embodiment 8: The method according to Embodiment 7, where the method further includes:
   receiving, by the base station, measurement report indication information and a measurement result from the user equipment, where the measurement report indication information is used to indicate that the measurement result is corresponding to the first control channel.
Embodiment 9: A resource indicating method, where the method includes:
   receiving, by user equipment, indication information sent by a base station, where the indication information is used to indicate, to the user equipment, configuration information for receiving a first control channel; and
   receiving, by the user equipment based on the configuration information indicated by the indication information, control information sent by the base station by using the first control channel.
Embodiment 10: The method according to Embodiment 9, where the configuration information includes: resource information, port information, or beam information corresponding to the first control channel, where
   the beam information includes at least one of the following: a transmit beam identifier, a receive beam identifier, a transmit-receive beam pair identifier, a transmit beam group identifier, a transmit-receive beam group identifier, beam quasi-co-location QCL assumption information, and beam information of a transmission mode;
   the resource information includes at least one of the following: a transmit resource identifier, a receive resource identifier, a transmit-receive resource pair identifier, a transmit resource group identifier, a transmit-receive resource group identifier, resource quasi-co-location QCL assumption information, and resource information of a transmission mode; and
   the port information includes at least one of the following: a transmit port identifier, a receive port identifier, a transmit-receive port pair identifier, a transmit port group identifier, a transmit-receive port group identifier, port quasi-co-location QCL assumption information, and port information of a transmission mode.
Embodiment 11: The method according to Embodiment 9 or 10, where the receiving, by user equipment, indication information sent by a base station includes:
   receiving, by the user equipment, the indication information sent by the base station by using a second control channel; or
   receiving, by the user equipment, the indication information sent by the base station by using higher layer signaling.
Embodiment 12: The method according to Embodiment 11, where
   the first control channel and the second control channel are sent in different time units; or
   the first control channel and the second control channel are sent in a same time unit; or
   the first control channel and the second control channel are sent on different carriers.
Embodiment 13: The method according to Embodiment 11 or 12, where
   configuration information corresponding to the second control channel remains unchanged within a preset time or a configured time.
Embodiment 14: The method according to any one of Embodiments 9 to 13, where the method further includes:
   sending, by the user equipment, a request message to the base station, where the request message includes update indication information, and the update indication information is used to instruct to update a resource, a port, or a beam corresponding to the first control channel.
Embodiment 15: The method according to Embodiment 14, where the method further includes:
   receiving, by the user equipment, measurement indication information and a measurement resource that are sent by the base station, where the measurement indication information is used to indicate that the measurement resource is corresponding to the first control channel.
Embodiment 16: The method according to Embodiment 15, where the method further includes:
   sending, by the user equipment, measurement report indication information and a measurement result to the base station, where the measurement report indication information is used to indicate that the measurement result is corresponding to the first control channel.
Embodiment 17: Abase station, including:
   a processor, configured to generate indication information, where the indication information is used to indicate, to the user equipment, configuration information for receiving a first control channel; and
   a transceiver, configured to send, to the user equipment, the indication information generated by the processor, where
   the transceiver is further configured to send control information to the user equipment by using the first control channel.
Embodiment 18: The base station according to Embodiment 17, where the configuration information includes: resource information, port information, or beam information corresponding to the first control channel, where
   the beam information includes at least one of the following: a transmit beam identifier, a receive beam identifier, a transmit-receive beam pair identifier, a transmit beam group identifier, a transmit-receive beam group identifier, beam quasi-co-location QCL assumption information, and beam information of a transmission mode;
   the resource information includes at least one of the following: a transmit resource identifier, a receive resource identifier, a transmit-receive resource pair identifier, a transmit resource group identifier, a transmit-receive resource group identifier, resource quasi-co-location QCL assumption information, and resource information of a transmission mode; and
   the port information includes at least one of the following: a transmit port identifier, a receive port identifier, a transmit-receive port pair identifier, a transmit port group identifier, a transmit-receive port group identifier, port quasi-co-location QCL assumption information, and port information of a transmission mode.
Embodiment 19: The base station according to Embodiment 18, where the transceiver is specifically configured to:
   send the indication information to the user equipment by using a second control channel; or
   send the indication information to the user equipment by using higher layer signaling.
Embodiment 20: The base station according to Embodiment 19, where
   the first control channel and the second control channel are sent in different time units; or
   the first control channel and the second control channel are sent in a same time unit; or
   the first control channel and the second control channel are sent on different carriers.
Embodiment 21: The base station according to Embodiment 19 or 20, where
   configuration information corresponding to the second control channel remains unchanged within a preset time or a configured time.
Embodiment 22: The base station according to any one of Embodiments 17 to 21, where
   the transceiver is further configured to receive a request message from the user equipment, where the request message includes update indication information, and the update indication information is used to instruct to update a resource, a port, or a beam corresponding to the first control channel.
Embodiment 23: The base station according to Embodiment 22, where
   the transceiver is further configured to send measurement indication information and a measurement resource to the user equipment, where the measurement indication information is used to indicate that the measurement resource is corresponding to the first control channel.
Embodiment 24: The base station according to Embodiment 23, where
   the transceiver is further configured to receive measurement report indication information and a measurement result from the user equipment, where the measurement report indication information is used to indicate that the measurement result is corresponding to the first control channel.
Embodiment 25: User equipment, including:
   a transceiver, configured to receive indication information sent by a base station, where the indication information is used to indicate, to the user equipment, configuration information for receiving a first control channel; and
   a processor, configured to determine, according to the indication information, the configuration information for receiving the first control channel, where
   the transceiver is further configured to receive, based on the configuration information determined by the processor, control information sent by the base station by using the first control channel.
Embodiment 26: The user equipment according to Embodiment 25, where the configuration information includes: resource information, port information, or beam information corresponding to the first control channel, where
   the beam information includes at least one of the following: a transmit beam identifier, a receive beam identifier, a transmit-receive beam pair identifier, a transmit beam group identifier, a transmit-receive beam group identifier, beam quasi-co-location QCL assumption information, and beam information of a transmission mode;
   the resource information includes at least one of the following: a transmit resource identifier, a receive resource identifier, a transmit-receive resource pair identifier, a transmit resource group identifier, a transmit-receive resource group identifier, resource quasi-co-location QCL assumption information, and resource information of a transmission mode; and
   the port information includes at least one of the following: a transmit port identifier, a receive port identifier, a transmit-receive port pair identifier, a transmit port group identifier, a transmit-receive port group identifier, port quasi-co-location QCL assumption information, and port information of a transmission mode.
Embodiment 27: The user equipment according to Embodiment 25 or 26, where the transceiver is specifically configured to:
   receive the indication information sent by the base station by using a second control channel; or
   receive the indication information sent by the base station by using higher layer signaling.
Embodiment 28: The user equipment according to Embodiment 27, where
   the first control channel and the second control channel are sent in different time units; or
   the first control channel and the second control channel are sent in a same time unit; or
   the first control channel and the second control channel are sent on different carriers.
Embodiment 29: The user equipment according to Embodiment 27 or 28, where
   configuration information corresponding to the second control channel remains unchanged within a preset time or a configured time.
Embodiment 30: The user equipment according to any one of Embodiments 25 to 29, where
   the transceiver is further configured to send a request message to the base station, where the request message includes update indication information, and the update indication information is used to instruct to update a resource, a port, or a beam corresponding to the first control channel.
Embodiment 31: The user equipment according to Embodiment 30, where
   the transceiver is further configured to receive measurement indication information and a measurement resource that are sent by the base station, where the measurement indication information is used to indicate that the measurement resource is corresponding to the first control channel.
Embodiment 32: The user equipment according to Embodiment 31, where
   the transceiver is further configured to send measurement report indication information and a measurement result to the base station, where the measurement report indication information is used to indicate that the measurement result is corresponding to the first control channel.
Embodiment 33: A resource system, including the base station according to any one of Embodiments 17 to 24, and the user equipment according to any one of Embodiments 25 to 32.

A person skilled in the art should be aware that in the foregoing one or more examples, functions described in the present invention may be implemented by hardware, software, firmware, or any combination thereof. When the functions are implemented by software, the functions may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another. The storage medium may be any available medium accessible to a general-purpose or dedicated computer.

The objectives, technical solutions, and beneficial effects of the present invention are further described in detail in the foregoing specific implementations. It should be understood that the foregoing descriptions are merely specific implementations of the present invention, but are not intended to limit the protection scope of the present invention. Any modification, equivalent replacement, or improvement made based on the technical solutions of the present invention shall fall within the protection scope of the present invention.

## Claims

1. A resource indicating method, comprising:
sending, by a base station, indication information to user equipment by using a higher layer signaling, wherein the indication information is used to indicate, to the user equipment, configuration information for receiving a first control channel, and the configuration information comprises a receive beam identifier or beam quasi-co-location QCL assumption information; and
sending, by the base station, control information to the user equipment by using the first control channel.

2. The method according to claim 1, wherein the higher layer signaling is:
a Radio Resource Control RRC message or a Media Access Control control element MAC-CE.

3. The method according to claim 1 or 2, wherein the first control channel is a physical downlink control channel PDCCH.

4. The method according to any one of claims 1 to 3, wherein the method further comprises:
receiving, by the base station, a request message from the user equipment, wherein the request message comprises update indication information, and the update indication information is used to instruct to update a beam corresponding to the first control channel.

5. The method according to claim 4, wherein the method further comprises:
sending, by the base station, measurement indication information and a measurement resource to the user equipment, wherein the measurement indication information is used to indicate that the measurement resource is corresponding to the first control channel.

6. The method according to claim 5, wherein the method further comprises:
receiving, by the base station, measurement report indication information and a measurement result from the user equipment, wherein the measurement report indication information is used to indicate that the measurement result is corresponding to the first control channel.

7. A resource indicating method, comprising:
receiving, by user equipment by using a higher layer signaling, indication information sent by a base station, wherein the indication information is used to indicate, to the user equipment, configuration information for receiving a first control channel, and the configuration information comprises a receive beam identifier or beam quasi-co-location QCL assumption information; and
receiving, by the user equipment based on the configuration information, control information sent by the base station by using the first control channel.

8. The method according to claim 7, wherein the higher layer signaling is:
a Radio Resource Control RRC message or a Media Access Control control element MAC-CE.

9. The method according to claim 7 or 8, wherein the first control channel is a physical downlink control channel PDCCH.

10. The method according to any one of claims 7 to 9, wherein the method further comprises:
sending, by the user equipment, a request message to the base station, wherein the request message comprises update indication information, and the update indication information is used to instruct to update a beam corresponding to the first control channel.

11. The method according to claim 10, wherein the method further comprises:
receiving, by the user equipment, measurement indication information and a measurement resource that are sent by the base station, wherein the measurement indication information is used to indicate that the measurement resource is corresponding to the first control channel.

12. The method according to claim 11, wherein the method further comprises:
sending, by the user equipment, measurement report indication information and a measurement result to the base station, wherein the measurement report indication information is used to indicate that the measurement result is corresponding to the first control channel.

13. Abase station, comprising:
a processor, configured to generate indication information, wherein the indication information is used to indicate, to the user equipment, configuration information for receiving a first control channel, and the configuration information comprises a receive beam identifier or beam quasi-co-location QCL assumption information; and
a transceiver, configured to send, to the user equipment by using higher layer signaling, the indication information generated by the processor, wherein
the transceiver is further configured to send control information to the user equipment by the first control channel.

14. The base station according to claim 13, wherein the higher layer signaling is:
a Radio Resource Control RRC message or a Media Access Control control element MAC-CE.

15. The base station according to claim 13 or 14, wherein the first control channel is a physical downlink control channel PDCCH.

16. The base station according to any one of claims 13 to 15, wherein
the transceiver is further configured to receive a request message from the user equipment, wherein the request message comprises update indication information, and the update indication information is used to instruct to update a beam corresponding to the first control channel.

17. The base station according to claim 16, wherein
the transceiver is further configured to send measurement indication information and a measurement resource to the user equipment, wherein the measurement indication information is used to indicate that the measurement resource is corresponding to the first control channel.

18. The base station according to claim 17, wherein
the transceiver is further configured to receive measurement report indication information and a measurement result from the user equipment, wherein the measurement report indication information is used to indicate that the measurement result is corresponding to the first control channel.

19. User equipment, comprising a transceiver and a processor, wherein
the processor is configured to:
receive, by using the transceiver by using higher layer signaling, indication information sent by a base station, wherein the indication information is used to indicate, to the user equipment, configuration information for receiving a first control channel, and the configuration information comprises a receive beam identifier or beam quasi-co-location QCL assumption information; and
receive, by using the transceiver based on the configuration information, control information sent by the base station by using the first control channel.

20. The user equipment according to claim 19, wherein the higher layer signaling is:
a Radio Resource Control RRC message or a Media Access Control control element MAC-CE.

21. The user equipment according to claim 19 or 20, wherein the first control channel is a physical downlink control channel PDCCH.

22. The user equipment according to any one of claims 19 to 21, wherein
the processor is further configured to send a request message to the base station by using the transceiver, wherein the request message comprises update indication information, and the update indication information is used to instruct to update a beam corresponding to the first control channel.

23. The user equipment according to claim 22, wherein
the processor is further configured to receive, by using the transceiver, measurement indication information and a measurement resource that are sent by the base station, wherein the measurement indication information is used to indicate that the measurement resource is corresponding to the first control channel.

24. The user equipment according to claim 23, wherein
the processor is further configured to send measurement report indication information and a measurement result to the base station by using the transceiver, wherein the measurement report indication information is used to indicate that the measurement result is corresponding to the first control channel.
